# EUROPEAN PATENT APPLICATION

(11) **EP 2 112 708 A2**
(43) Date of publication of application: **28.10.2009**
(21) Application number: 09156318.9
(22) Date of filing: 26.03.2009
(51) Int. Cl.: H01M 8/04, H01M 8/06, H01M 8/12

(54) **Method and apparatus for anode oxidation prevention and cooling of a solid-oxide fuel cell stack**

(30) Priority: 04.04.2008 US 80588
(71) Applicant: Delphi Technologies, Inc., Troy, Michigan 48007 (US)
(72) Inventor: Mergler, Christopher Michael, W Henrietta, NY 14586 (US)
(74) Representative: Denton, Michael John

(57) **Abstract**

An apparatus and method for a normal system shutdown of a SOFC system implements a control strategy that utilizes existing system hardware and operating processes already used during normal operation of the SOFC system. The control strategy enables the SOFC system to generate the fluid needed for prevention of oxidation during the cooling process of the anode side of the SOFC stack by converting the conventional system fuel supply for delivery of a reducing fluid to the anode side of the SOFC stack during normal system shutdown thereby preventing subjecting the hardware to cyclic stress that typically occurs during oxidation. The control strategy further enables the SOFC system to control the temperature gradient that exists across the system hardware thereby eliminating induction of thermal stress on the hardware, hence prolonging the life of the system hardware.

## Description

### TECHNICAL FIELD

The present invention relates to hydrogen/oxygen fuel cells having a solid-oxide electrolyte layer separating an anode layer from a cathode layer; more particularly, to fuel cell assemblies and systems including a plurality of individual fuel cells in a stack wherein air and reformed fuel are supplied to the stack; and most particularly, to an apparatus and method for anode oxidation prevention within the stack during normal system shutdown and a stack cooling strategy.

### BACKGROUND OF THE INVENTION

Fuel cells, which generate electric current by the electrochemical combination of hydrogen and oxygen, are well known. In one form of such a fuel cell, an anodic layer and a cathodic layer are separated by an electrolyte formed of a ceramic solid oxide. Such a fuel cell is known in the art as a Solid-Oxide Fuel Cell (SOFC). SOFC systems derive electrical power though a high-efficiency conversion process from a variety of fuels including natural gas, liquefied petroleum gas, ethanol, and other hydrocarbon and non-hydrocarbon fuels. Hydrogen, either pure or reformed from hydrocarbons, is flowed along the outer surface of the anode and diffuses into the anode. Oxygen, typically from air, is flowed along the outer surface of the cathode and diffuses into the cathode.

Each O₂ molecule is split and reduced to two O⁻² anions catalytically by the cathode. The oxygen anions transport through the electrolyte and combine at the anode/electrolyte interface with four hydrogen ions to form two molecules of water. The anode and cathode are connected externally through a load to complete the circuit whereby four electrons are transferred from the anode to the cathode.

When hydrogen as a feed stock for the fuel cell is derived by "reforming" hydrocarbons such as gasoline in the presence of limited oxygen, the reformate gas includes CO which is converted to CO₂ at the anode via an oxidation process similar to that performed on the hydrogen. A single fuel cell is capable of generating a relatively small amount of voltage and wattage and, therefore, in practice it is known to stack a plurality of fuel cells together in electrical series.

Reformed gasoline is a commonly used feed stock in automotive fuel cell applications. Reformate gas is typically the effluent from a catalytic liquid or gaseous hydrogen oxidizing reformer and is often referred to as "fuel gas" or "reformate". Reformate typically includes amounts of carbon monoxide (CO) as fuel in addition to molecular hydrogen. The reforming operation and the fuel cell operation may be considered as first and second oxidative steps of the hydrocarbon fuel, resulting ultimately in water and carbon dioxide. Both reactions are preferably carried out at relatively high temperatures, for example, in the range of about 700 °C to about 900 °C.

Since optimum fuel consumption and electrical generation, and therefore optimum efficiency of a SOFC stack, are reached at relatively high operating temperatures, a cooling process needs to be performed prior to normal system shutdowns. The system shutdown is a period that occurs, for example, prior to an extended duration of nonuse. Typically, the SOFC stack is cooled with air utilizing the cathode airflow. Due to the relative high operating temperature of the SOFC stack, typically about 750 °C and higher, and the chemical composition of the anodes, which are the system's functional and most vulnerable components, purging the entire SOFC stack with cathode air for cooling results in a degrading and fatiguing oxidation of the anodes. The anode side of the fuel cell is, in part, nickel. At temperatures above about 400 °C, and in the presence of free oxygen, nickel oxide is formed, which may lead to deterioration of the SOFC stack over time, which may cause failure of the SOFC stack. Therefore, it is harmful to the SOFC stack when oxygen is allowed in the cavities adjacent to the plurality of anodes.

The currently used method for preventing the oxidation of the anodes is a process in which the cavities in the anode side of the SOFC stack are purged with a fluid containing no free oxygen during system cool down. For example, a blend of bottled reducing gas may be flowed through the anode side of the SOFC stack while the system cools from its operating temperature to a temperature below about 400 °C when harmful oxidation of the anodes ceases. This process requires a reservoir to store, means to pressurize, and hardware to meter the reducing fluid, in addition to hardware and reservoirs required for normal system operation. As a secondary issue, the fluid necessary to perform this purging process is currently not commercially available. Furthermore, a purging process with such reducing fluid may subject the system hardware to an uncontrolled thermal gradient, and therefore may induce unnecessary stress on the anode side of the stack.

What is needed in the art is a cooling strategy that eliminates the need for supplementary system hardware and mitigates the risk of subjecting the SOFC system to degradation mechanisms during normal system shutdowns.

It is a principal object of the present invention to provide a SOFC stack cooling strategy for normal system shutdown that utilizes existing system hardware and conventional fuel supply to provide the oxygen free environment required to cool down the system to a point that the functional components of the SOFC system are no longer at risk of degradation.

### SUMMARY OF THE INVENTION

Briefly described, an apparatus and method for a normal system shutdown of a SOFC system implements a control strategy that utilizes component hardware already available for normal operation of the SOFC system. This unique and novel control strategy enables the SOFC system to generate the fluid needed for prevention of oxidation during the cooling process of the anode side of the SOFC stack by converting the conventional system fuel supply for the delivery of a reducing fluid to the anode side of the SOFC stack during normal system shutdown. Purging the anode side of the SOFC stack is accomplished with a reducing fluid that is generated by using existing system hardware and the conventional fuel supply. As a result, the anode side of the stack is protected from oxidation and the cyclic stress that such oxidation would subject the hardware to is prevented, thereby prolonging the life of the SOFC system.

An additional benefit of the invention lies in the system's ability to control the temperature gradient that exists across the system hardware. The undesirable thermal stress that is currently induced on the hardware during a normal system shutdown when a prior art additional reducing fluid from an additional reservoir is used may therefore be eliminated. Accordingly, the apparatus and method in accordance with the invention not only prevents a potentially detrimental oxidation to susceptible system components from occurring, such as the anodes of the SOFC system, but it also eliminates the need for a currently used second reducing fluid stored in a second reservoir and a currently used secondary purging process of the anode side of the SOFC stack.

The control strategy in accordance with the invention allows the cooling rate of the SOFC stack to be controlled during a normal system shutdown by an existing control system, as well as provides the oxygen free environment needed to prevent damage from oxidation to the stacks in the SOFC system. Accordingly, cooling the SOFC stack with a controlled temperature gradient to a temperature below the critical temperature for detrimental oxidation is enabled while a reducing environment on the anode side of the stack is maintained.

### BRIEF DESCRIPTION OF THE DRAWINGS

The present invention will now be described, by way of example, with reference to the accompanying drawings, in which:
FIG. 1 is a schematic mechanization diagram of an SOFC system in accordance with the invention; and
FIG. 2 is a schematic flow chart of a cooling strategy for the SOFC system in accordance with the invention.

Corresponding reference characters indicate corresponding parts throughout the several views. The exemplification set out herein illustrates one preferred embodiment of the invention, in one form, and such exemplification is not to be construed as limiting the scope of the invention in any manner.

### DESCRIPTION OF THE PREFERRED EMBODIMENTS

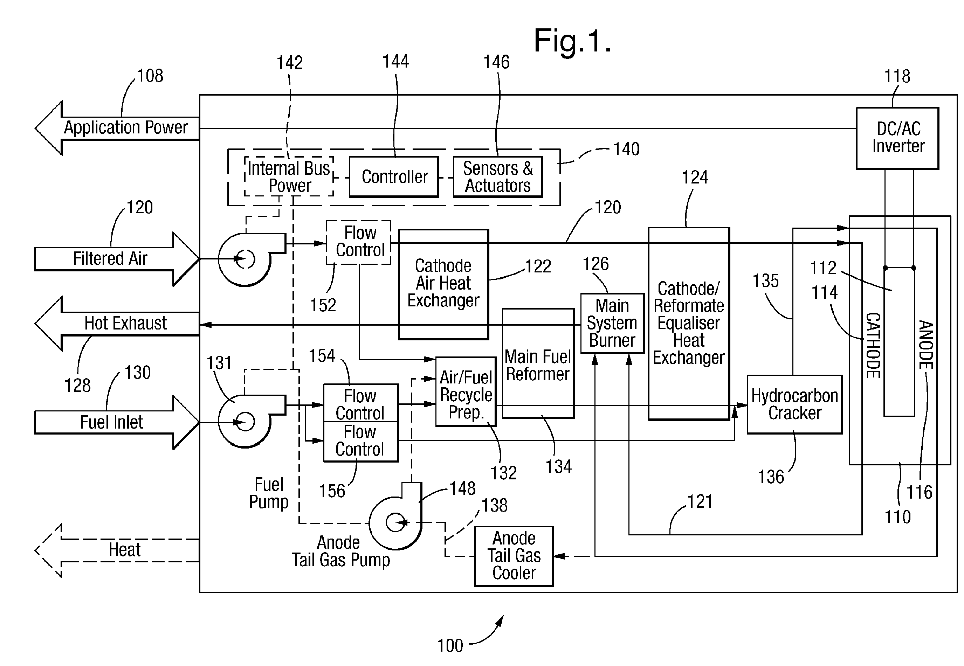

Referring to FIG. 1, a schematic mechanization diagram of an SOFC system 100 in accordance with the invention is illustrated. The SOFC system 100 includes at least one SOFC stack 110 as well as auxiliary equipment and controls. SOFC stack 110 includes a plurality of solid-oxide fuel cells 112 stacked together in electrical series. Each of the fuel cells 112 includes a cathode 114 and an anode 116, the plurality of cathodes 114 forming the cathode side of stack 110 and the plurality of anodes 116 forming the anode side of stack 110. Because each anode 116 and cathode 114 must have a free space for fluid passage over its surface, the cathode side and the anode side of stack 110 are typically separated by perimeter spacers which are selectively vented to permit fluid flow to the anodes 116 and cathodes 114 as desired but which also form seals on the axial surfaces to prevent fluid leakage from the cathode side of stack 110 to the anode side of stack 110 and vise versa. Thus, all of the cathodes 114 are in parallel pneumatic flow and all of the anodes 116 are in parallel pneumatic flow. SOFC stack 110 is electrically connected to a DC/AC inverter 118 to convert a voltage generated by fuel cells 112 to application power 108 usable by an external load.

Filtered air 120 entering SOFC system 100 at or near ambient temperature may be preheated to accommodate and regulate the temperature of SOFC stack 110 and is, therefore, controllably passed through a cathode air heat exchanger 122 ahead of stack 110 using hot exhaust stream 128 as a heat source. Filtered air 120 may also be used to cool electronics of an electronic control system 140, which may include, for example, an internal bus power unit 142, a controller 144, and a plurality of sensors and actuators 146. Air 120 is further passed through a cathode/reformate equalizer heat exchanger 124 before entering SOFC stack 110. Within stack 110, air 120 is provided to the surfaces of the cathodes 114. The total of incoming air 120 is divided among the plurality of cathodes 114 such that each increment of air passes over only a single cathode 114 and then is collected in an air exhaust manifold. The relatively hot spent air 121 coming from cathode 114 may be first utilized by a main system burner 126. The heat of the hot exhaust stream 128 coming from main burner 126 may be utilized by a main fuel reformer 134 as well as the cathode air heat exchanger 122 before exiting system 100.

Fuel 130, for example gasoline, natural gas, liquefied petroleum gas, ethanol, and other hydrocarbon and non-hydrocarbon fuels, is controllably provided to system 100 by a fuel feed pump 131 that draws fuel 130 from a storage tank. Fuel 130 is combined with a portion of filtered air 120 and in some occasions with anode tail gas 138 in an air/fuel/recycle preparation unit 132 before it is vaporized and fed to the main fuel reformer 134. Main fuel reformer 134 may derive the heat needed for the reforming processes from the hot exhaust stream 128 coming from main system burner 126. Main fuel reformer 134 reforms fuel 130 to, principally, hydrogen and carbon monoxide. The effluent exiting main fuel reformer 134, reformate 135, is passed through a hydrocarbon cracker 136 where it may be further processed before being fed to the anodes 116 in SOFC stack 110. Reformate 135 is passed through cathode/reformate equalizer heat exchanger 124 before entering hydrocarbon cracker 136. Cathode/reformate equalizer heat exchanger 124 is utilized to bring the temperature of the reformate 135 coming from main fuel reformer 134 and the temperature of incoming air 120 to be fed to the cathodes 114 (cathode air) as close together as possible.

Main fuel reformer 134 and hydrocarbon cracker 136 are used in varying capacity based on the operating point of system 100. During low power operation of system 100, air 120 and fuel 130 are processed by main fuel reformer 134 and the effluent (reformate 135) passes through hydrocarbon cracker 136 with little or no further processing. Little or no chemical reaction takes place within hydrocarbon cracker 136 in this case. During medium power operation of system 100, some filtered air 120, fuel 130, and anode tail gas 138 (recycle) is processed by the main fuel reformer 134, however with the addition of recycled anode tail gas 138, a higher level of H₂O and CO₂ is contained in the reformate 135. When this reformate 135 is blended with unprocessed fuel 130 before entering hydrocarbon cracker 136, the H₂O, CO₂, and unprocessed fuel 130 react as they pass through hydrocarbon cracker 136. The chemical reactions that take place in hydrocarbon cracker 136 are more efficient than those that take place in main fuel reformer 134, thus boosting the overall efficiency of system 100. During high power operation of system 100, all of the fuel 130 entering system 100 may be processed by hydrocarbon cracker 136 and only the anode tail gas 138 may pass through main fuel reformer 134, using main fuel reformer 134 only as a conduit for the tail gas. During normal system shutdown, no chemical reaction takes place in hydrocarbon cracker 136 and hydrocarbon cracker 136 is used only as a conduit for feeding the reformate 135 formed in main fuel reformer 134 to the anodes 116 of stack 110.

The total reformate 135 entering the stack 110 assembly is divided among the plurality of anodes 116 such that each increment of reformate 135 passes over only a single anode 116 and is then collected in the reformate exhaust manifold. Unconsumed fuel 130 from the anodes 116 is fed to main system burner 126 where the fuel is combined with air 120 coming from the cathodes 114 and is burned. The hot burner gases, hot exhaust stream 128, may be passed through a cleanup catalyst in main fuel reformer 134 and may then be passed through the hot side of cathode heat exchanger 122 to heat the incoming air 120 before being exhausted from system 100. Unconsumed fuel 130 from the anodes 116 in the form of anode tail gas 138 may be cooled and fed via anode tail gas pump 148 to air/fuel/recycle preparation unit 132 for recycling.

The electronic control system 140 is utilized to control the flow of air 120 and fuel 130, as well as an anode tail gas pump 148 that provides cooled anode tail gas 138 (recycle) to air/fuel/recycle preparation unit 132. Individual flow controllers that are controlled by controller 144 may be included in the air circuit and in the fuel circuit. A flow controller 152 as shown in FIG. 1 is integrated in the air circuit and controls the flow of filtered air 120 to cathode heat exchanger 122 and air/fuel/recycle preparation unit 132. A flow controller 154 is shown integrated in a primary fuel circuit and controls the flow of fuel 130 to air/fuel/recycle preparation unit 132 and to main fuel reformer 134. A flow controller 156 is shown integrated in a secondary fuel circuit and controls a flow of unprocessed fuel 130 to be blended with reformate 135 immediately upstream of hydrocarbon cracker 136.

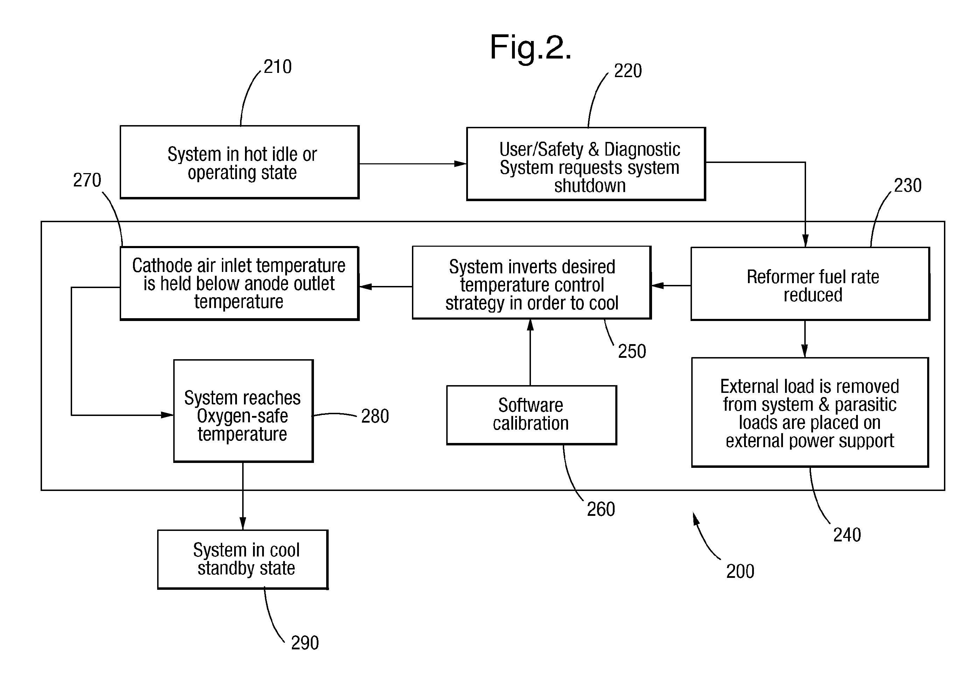

Referring to FIG. 2, a cooling strategy 200 for normal system shutdown of the SOFC system 100 shown in FIG. 1 in accordance with the invention is illustrated. Cooling strategy 200 may be applied when system 100 is in a hot idle or hot operating state 210. In the hot idle state system 100 is not producing power but has been driven up to a relatively hot operating temperature; and in the hot operating state system 100 is producing power at the relatively high operating temperature. When a user or an onboard diagnostic system, which may be part of the electronic control system 140, requests a shutdown of system 100 in a step 220, the following steps 230 and 240 occur in a coordinated fashion. In a step 230 the rate at which fuel 130 is provided to system 100 is reduced. As a result, the amount of reformate 135 produced by main fuel reformer 134 is also reduced. To use as little fuel 130 as possible, the fuel rate of the reformer 134 may be reduced to its minimum-operating limit even though this is not required. At the same time, an external load using application power 108 is removed from system 100 and parasitic loads are placed on external power support, in a step 240. The external power support may be provided, for example, by an existing external power supply that is used during start up of system 100.

In a following step 250, the electronic control system 140 inverts a desired temperature control strategy in order to start the cooling process of SOFC stack 110. This control strategy may include the request of a new target temperature for SOFC stack 110. Such target temperature is preferably a temperature below the oxidation temperature of the anodes 116. Additional software for calibration of system 100 during cool down of stack 110 may be installed in the already existing system controller 144 in a step 260. In a following step 270, a control algorithm holds an inlet temperature of air 120 provided to the cathodes 114 below an outlet temperature of the anodes 116. The software implemented in controller 144 in step 250 adjusts the temperature of the air 120 provided to the cathodes 114 and the temperature of the reformate 135 fed to the anodes 116 of stack 110 in order to cool stack 110 and system 100 until an oxygen-safe temperature for anodes 116 is reached in a step 280. Until the oxygen-safe temperature is reached in step 280, reformate 135 is fed to the anodes 116 to avoid formation of free oxygen around anodes 116.

By purging the anode side of stack 110 with reformate 135 during the cool down of stack 110, air 120 used for cooling the cathode side of stack 110 is prevented from entering the anode side of stack 110 and the need for a currently used supplementary reducing fluid can be eliminated. When stack 110 and, therefore system 100, reaches a temperature below the oxidation risk of anodes 116, the supply of fuel 130 to system 100 is stopped, and accordingly the production of reformate 135 in fuel reformer 134 and feeding of reformate 135 to the anodes 116 of stack 110 is stopped. System 100 may be cooled down to a standby state temperature by supplying air 120 alone to stack 110 in a last step 290. As can be seen, only a primary fuel circuit including flow controller 154, main fuel reformer 134, cathode/reformate equalizer heat exchanger 124, SOFC stack 110 and an air circuit including flow control 152 and cathode air heat exchanger 122 are used by cooling strategy 200 for normal system shutdown of the SOFC system 100.

As illustrated in FIG. 2, the ability of SOFC system 100 to control the cathode air temperature allows a controlled cool down of SOFC stack 110 upon request, which may be manual or automatic. Accordingly system 100 is able to control the temperature gradient that exists across stack 110 eliminating potential induction of thermal stress within stack 110 thereby prolonging the life of stack 110. The cooling strategy 200 for normal system shutdown of the SOFC system 100 enables system 100 to generate the fluid used to prevent the oxidation of the anodes 116 during the cool down of stack 110 by converting the conventional system fuel 130 to a reducing fluid. This protects the anode side of stack 110 from oxidation and from the cyclic stress that the oxidation subjects the anodes 116 to, hence prolonging the operational life of stack 110 and system 100. Accordingly, cooling strategy 200 allows for the cooling rate of stack 110 to be controlled by the conventional control system 140 of system 100, and also provides the oxygen free environment needed to prevent damage to stack 110 at oxidation enabling temperatures.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A method of cooling for normal system shutdown of a solid-oxide fuel cell system, including a fuel cell stack, the method comprising the steps of:
reducing a fuel rate to a fuel reformer thereby reducing an amount of reformate produced by said fuel reformer;
purging an anode side of the fuel cell stack with said reformate;
feeding air to a cathode side of said solid-oxide fuel cell stack; and
adjusting a temperature of said air to be below an outlet temperature of said anode side of said solid-oxide fuel cell stack until said solid-oxide fuel cell stack reaches an oxygen-safe temperature.

2. The method of Claim 1, further including the steps of:
manually or automatically requesting said system shutdown;
removing all external loads from said solid-oxide fuel cell system concurrently with said reduction of said fuel rate; and
placing a load on a conventional external power support.

3. The method of Claim 1, further including the steps of:
requesting a target temperature for said solid-oxide fuel cell stack below the oxidation temperature of said anode side with an existing control system.

4. The method of Claim 1, further including the step of:
adjusting the temperature of said reformate in order to cool down said solid-oxide fuel cell stack.

5. The method of Claim 1, further including the steps of:
stopping a fuel supply to said fuel reformer when said stack reaches an oxygen-safe temperature; and
cooling said stack with said air alone to a temperature that is lower than said oxygen safe temperature.

6. The method of Claim 1, further including the step of:
reducing said fuel rate to a minimum-operating limit of said fuel reformer.

7. A method for preventing anode oxidation of a solid-oxide fuel cell assembly during normal shutdown of a solid-oxide fuel cell system, comprising the steps of:
utilizing reformate produced by a fuel reformer as a reducing fluid;
feeding said reformate to a plurality of anodes of said solid-oxide fuel cell assembly as long as a temperature of said solid-oxide fuel cell assembly is above an oxidizing temperature of said anodes; and
controlling a temperature of an air flow provided to a plurality of cathodes included in said solid-oxide fuel cell assembly.

8. The method of Claim 7, wherein said air temperature is controlled by a controller controlling said solid-oxide fuel cell assembly.

9. The method of Claim 7, further including the step of:
producing said reformate for said feeding step at a rate lower than a rate needed to operate said solid-oxide fuel cell assembly; and/or
controlling a temperature gradient that exists across said solid-oxide fuel cell assembly; and/or
preventing oxidation of said anodes by eliminating free oxygen in cavities surrounding said anodes.

10. A solid-oxide fuel cell system, comprising:
at least one solid-oxide fuel cell stack including a plurality of cathodes and a plurality of anodes;
a primary fuel circuit controllably providing fuel to a main fuel reformer and a hydrocarbon cracker, wherein the effluent of said main fuel reformer and/or the effluent of said hydrocarbon cracker is fed to said anodes;
a secondary fuel circuit controllably providing fuel to be blended with said effluent of said main fuel reformer; and
an air circuit controllably feeding air to said cathodes and to said primary fuel circuit.

11. The solid-oxide fuel cell system of Claim 10, further including an electronic control system that controls said primary fuel circuit, said secondary fuel circuit, and said air circuit during operation and during shutdown of said solid-oxide fuel cell system.

12. The solid-oxide fuel cell system of Claim 10, further including a cathode air heat exchanger that heats said air and a cathode/reformate equalizer heat exchanger that balances the temperatures of said air and of said effluent of said main fuel reformer.

13. The solid-oxide fuel cell system of Claim 10, further including an anode tail gas pump for providing tail gas from said anodes to said primary fuel circuit upstream of said main fuel reformer.

14. The solid-oxide fuel cell system of Claim 10, further including a main system burner that burns unconsumed fuel coming from said anodes mixed with air coming from said cathodes, wherein hot burner gases are utilized by a cathode heat exchanger.

15. The solid-oxide fuel cell system of Claim 10, wherein said main fuel reformer and said hydrocarbon cracker are used in a varying capacity based on an operating point of said solid-oxide fuel cell system.
